# EUROPÄISCHE PATENTSCHRIFT

(11) **EP 3 987 215 B1**
(45) Veröffentlichungstag und Bekanntmachung des Hinweises auf die Patenterteilung: **24.05.2023**
(21) Anmeldenummer: 20735504.1
(22) Anmeldetag: 22.06.2020
(51) Int. Cl.: F16L 59/02

(54) **HOCHTEMPERATURISOLIERUNG ZUR WÄRMEDÄMMUNG VON ROHREN**
HIGH-TEMPERATURE INSULATION FOR THERMALLY INSULATING PIPES
ISOLATION HAUTE TEMPÉRATURE POUR L'ISOLATION THERMIQUE DE TUBES

(30) Priorität: 24.06.2019 DE 202019103492 U
(43) Veröffentlichungstag der Anmeldung: 27.04.2022
(73) Patentinhaber: NIES, Klaus-Dieter, 57399 Kirchhundem (DE)
(72) Erfinder: NIES, Klaus-Dieter, 57399 Kirchhundem (DE)
(74) Vertreter: Pelster Behrends Patentanwälte PartG mbB
(86) Internationale Anmeldenummer: PCT/EP2020/067293
(87) Internationale Veröffentlichungsnummer: WO 2020/260179

(56) Entgegenhaltungen:
- EP-A1- 2 947 368
- EP-A2- 2 682 662
- CN-A- 109 027 525
- US-A- 2 264 967
- US-A1- 2015 285 426

## Beschreibung

Die vorliegende Erfindung betrifft eine Hochtemperaturisolierung zur Wärmedämmung von Rohren, ein Verfahren zur Herstellung einer Hochtemperaturisolierung und die Verwendung einer Hochtemperaturisolierung als Isolierung, feuerfester Brandschutz und/oder Schallisolierung für Rohrleitungen für Fluide sowie die Verwendung als Innen- und/oder Außenverkleidung für einen Behälter und entsprechend ausgekleidete Behälter.

Der Gegenstand der Erfindung ist in den beigefügten Ansprüchen definiert.

Es ist allgemein bekannt, dass Rohre und Rohrleitungssysteme, in denen heiße Fluide wie Gase und Flüssigkeiten geführt werden, gegenüber der Umgebung mittels einer geeigneten Isolierung abgeschirmt werden müssen, um eine ungewünschte Abgabe von Wärmeenergie an die Umgebung zu vermeiden. Im Stand der Technik sind bereits Dämm- und Isolierelemente bekannt, von denen einige auch zur Wärmedämmung von Rohren verwendet werden können und die in einigen Fällen aus mehreren, übereinander angeordneten Lagen von Dämmmaterial gebildet sind.

Die DE 202017101498 U1 offenbart beispielsweise Wärmeschutz-Wellschläuche zur Verwendung in Fahrzeug-, Transport-, Industrie- und anderen Anwendungen. Die DE 10 2017 128 801 A1 offenbart ein Dämmelement, das aus einem Dämmschichtstapel besteht, so dass mehrere Dämmschichtelemente auf einmal verlegt werden können, wobei die Dämmschichtelemente einen gegenseitigen Randversatz aufweisen, der bei aneinander angesetzten Dämmschichtelementen für eine Überlappung im Bereich des Randversatzes sorgt. Die DE 102013019682 A1 offenbart ein Dämmelement für die Wärme- und/oder Schalldämmung von Rohren bzw. Rohrleitungen, insbesondere Kaminrohren von Kaminsystemen, in Form einer Rohrschale aus mit Bindemitteln versetzter und ausgehärteter Mineralwolle, wobei die Rohrschale mit ihrer inneren Mantelfläche vorzugsweise einen rotationszylindrischen und sich längs der Achse der Rohrschale erstreckenden Hohlraum für die Aufnahme des zu dämmenden Rohres begrenzt. Die DE 19746091 A1 offenbart eine Vielschichtisolierung, bei der die Stöße einzelner Schichten über den Umfang versetzt angeordnet sind, sodass kein durchreichender Spalt entsteht, der von dem äußeren Vakuummantel bis zu dem zu isolierenden Rohr reicht und der dann durch Zusatzteile geschlossen werden müsste. Die EP 1279883 A2 offenbart ein mehrschichtiges, schlauchförmiges Dämmmaterial für Rohrleitungen, die zur Führung von Fluiden höherer Temperatur bestimmt sind. Die EP 2705198 B1 offenbart eine Wärmedämmstoffmatte, insbesondere für den Gebäudebau, die aus übereinander angeordneten Lagen gebildet ist, die mittels wenigstens einer in Längs- und/oder Querrichtung der Matte ausgeführten Naht zusammengehalten sind; sowie ein Verfahren zur Herstellung solcher Wärmedämmstoffmatten. Die EP 0896184 A2 offenbart eine Dämmummantelung für Brandschutz-, Wärme- und Körperschalldämmung von Rohren, Kanälen, Armaturen und Anlagen mit einer äu-ßeren Schutzschicht, einer innenseitigen Gleitschicht und einer zumindest einlagigen Mittelschicht aus dämmendem Material. Weiterer Stand der Technik, der den allgemeinen technischen Hintergrund veranschaulicht, ist in der WO 2018056626 A1, der US 2015/0285426 A1, der US 2015/0260329 A1, der US 4332401 A, der US 2826523 A, der DE 2607930 A1, der DD286028 A5, der DE 3428080 C2, der EP 2682662 A2, der EP2947368 A1, der US 2264967 A, der CN 109027525 A und der KR 101536565 B1 offenbart.

Darüber hinaus sind im Stand der Technik auch gerollte bzw. gewickelte Rohrisolierungen und Verfahren zu deren Herstellung bekannt, so wie sie beispielsweise in der WO 2004/091910 A1 oder der EP 2397742 A1 offenbart werden. Die EP 2168756 A1 offenbart ein relativ grundsätzliches Verfahren zur Herstellung von rohrförmigen Körpern, durch das gleichzeitige Aufrollen von zwei Materialien, wobei die so erhaltenen Strömungskörper keine Hochtemperaturisolierungen für Rohre sind, sondern die Schichtstrukturen selbst als Rohrleitungen verwendet werden und der Aspekt der Isolierung nicht thematisiert wird.

Trotz der grundsätzlich vorteilhaften Eigenschaften der bereits bekannten Materialien besteht ein stetes Bedürfnis danach, diese weiterzuentwickeln. Die Dämm- und Isolierelemente aus dem Stand der Technik sind zwar häufig auf bestimmte Anwendungen und Anforderungen hin optimiert worden, werden jedoch oft in vielerlei Hinsicht als nachteilig empfunden. So wird beispielsweise die teilweise niedrige Beständigkeit unter thermischer und/oder mechanischer Belastung sowie die teilweise geringe Beständigkeit gegenüber äußeren Umwelteinflüssen, insbesondere Feuchtigkeit, regelmäßig als besonders nachteilig empfunden. Viele der im Stand der Technik bekannten Materialien sind zudem nur relativ umständlich zu transportieren und wegen eines hohen Platzbedarfs nur relativ teuer zu lagern. Zudem wäre regelmäßig eine höhere Flexibilität der Materialien wünschenswert, die eine leichtere Anpassung an vorgegebene Formen, insbesondere Rohrformen ermöglicht. Im Stand der Technik tritt zudem häufig das Problem auf, dass die bekannten Materialien bei der Herstellung oder Verarbeitung eine ausgeprägte Staubentwicklung zeigen, die zur Verschmutzung der Umgebung führt und für die mit der Herstellung oder Verarbeitung befassten Arbeiter eine Gesundheitsbelastung darstellen kann. Darüber hinaus werden die optischen und haptischen Eigenschaften der Oberfläche der bekannten Materialien häufig als unzureichend und wenig ansprechend empfunden. Dies ist insbesondere deshalb relevant, weil sich viele der im Stand der Technik bekannten Materialien zudem nur relativ schwer beschichten lassen und Beschichtungen auf diesen häufig eine unvorteilhafte Adhäsion zeigen. Als ganz besonders nachteilig wird jedoch regelmäßig angesehen, dass die Isolier- bzw. Dämmwirkung relativ zur Materialstärke im Stand der Technik oft nur unzureichend ist, so dass die Abschirmung nicht ausreichend ist oder besonders dicke und/oder schwere Dämmschichten verwendetet werden müssen. Ebenso wird in einigen Fällen die Wärmestrahlung vom Dämmmaterial nur unzureichend reflektiert oder eine an sich wünschenswerte zusätzliche Schalldämmung kann nicht effektiv gewährleistet werden. Darüber hinaus sind zahlreiche der im Stand der Technik bekannten Materialien nur verhältnismäßig aufwendig und/oder unter Verwendung kostspieliger Materialien herzustellen und entsprechend teuer.

Die vorliegende Erfindung basiert deshalb auf der primären Aufgabe, die vorstehend beschriebenen Nachteile des Standes der Technik zu beseitigen oder zumindest zu verringern. Demnach liegt der vorliegenden Erfindung insbesondere die Aufgabe zu Grunde, eine besonders beständige Hochtemperaturisolierung anzugeben, die effektiv zu transportieren und zu lagern ist und eine hohe Flexibilität aufweist. Eine entsprechende Hochtemperaturisolierung sollte dabei vorteilhafterweise bei der Herstellung und Verarbeitung eine verringerte Staubentwicklung zeigen und über gute optische und haptische Eigenschaften sowie über eine gute Beschichtbarkeit verfügen. Insbesondere war es jedoch die Aufgabe eine Hochtemperaturisolierung anzugeben, die besonders günstige Dämmeigenschaften aufweist und dabei besonders einfach, sicher und kostengünstig herzustellen ist. Entsprechend war es auch eine Aufgabe, ein vorteilhaftes Herstellverfahren sowie Verwendungen für entsprechende Hochtemperaturisolierungen sowie einen Entsorgungsbehälter umfassend eine entsprechende Hochtemperaturisolierung anzugeben. Weitere Aufgaben ergeben sich aus der nachfolgenden Beschreibung und den beigefügten Ansprüchen.

Die vorstehend genannten Aufgaben werden durch Gegenstände, Verfahren und Verwendungen gelöst, wie sie in den beigefügten Ansprüchen definiert sind. Bevorzugte erfindungsgemäße Ausgestaltungen ergeben sich aus den Unteransprüchen.

In den Figuren zeigen:
Figur 1: Den Querschnitt durch eine erfindungsgemäße Hochtemperaturisolierung.
Figur 2: Einen schematischen, simulierten Temperaturverlauf durch eine erfindungsgemäße Hochtemperaturisolierung.

Die vorliegende Erfindung betrifft insbesondere eine Hochtemperaturisolierung zur Wärmedämmung von Rohren, umfassend
eine spiralförmig zu einem rohrförmigen Grundkörper gewickelte Trägerschicht mit vier oder mehr Wicklungen,
   und
drei oder mehr unterschiedliche Dämmschichten,
wobei die innenliegende Wicklung der Trägerschicht den innenliegenden Hohlraum des rohrförmigen Grundkörpers in Umfangsrichtung umgibt, wobei der Kreisumfang des innenliegenden Hohlraums zumindest 50 mm beträgt,
wobei die Dämmschichten in den Zwischenräumen zwischen den Wicklungen der Trägerschicht angeordnet sind und in radiale Richtung jeweils innen und außen mit der Trägerschicht in Kontakt stehen,
wobei die in der Trägerschicht angeordneten Dämmschichten entlang der jeweils durch Wicklung vorgegebenen Kreisbahn eine Länge aufweisen, die zumindest 80 % des Kreisumfangs des innenliegenden Hohlraums des rohrförmigen Grundkörpers entspricht, und
wobei die Trägerschicht, die erste Dämmschicht, die zweite Dämmschicht und die dritte Dämmschicht jeweils aus unterschiedlichen Materialien bestehen und/oder unterschiedliche Wärmeleitfähigkeiten aufweisen und/oder unterschiedliche Temperaturbeständigkeiten aufweisen, wobei bevorzugt die Trägerschicht, die erste Dämmschicht, die zweite Dämmschicht und die dritte Dämmschicht jeweils aus unterschiedlichen Materialien bestehen und/oder unterschiedliche Wärmeleitfähigkeiten aufweisen, wobei ganz besonders bevorzugt die Trägerschicht, die erste Dämmschicht, die zweite Dämmschicht und die dritte Dämmschicht jeweils unterschiedliche Wärmeleitfähigkeiten aufweisen.

Hochtemperaturisolierungen zur Wärmedämmung von Rohren sind dem Fachmann bekannt. Im Rahmen der vorliegenden Erfindung ist, im Einklang mit dem fachmännischen Verständnis, eine Hochtemperaturisolierung zur Wärmedämmung von Rohren zumindest geeignet, ein mehr als 100 °C heißes Rohr über einen Zeitraum von mehreren Monaten so zu isolieren, dass die Oberflächentemperatur der Isolierung bei einer Umgebungstemperatur von 25 °C weniger als 60 °C beträgt. Dies bedeutet, dass beispielsweise die Umwicklung mit einer sehr dünnen Metallfolie oder eine Beschichtung mit einem nicht-temperaturbeständigen Material zwar prinzipiell zumindest kurzfristig zu einer zumindest niedrigen Isolierwirkung führen können, beide Ausgestaltungen jedoch vom Fachmann nicht als Hochtemperaturisolierung im Sinne der vorliegenden Erfindung angesehen werden.

Im Rahmen der vorliegenden Erfindung werden die Ausdrücke wickeln und rollen sowie die Ausdrücke gewickelt und gerollt synonym verwendet und bezeichnen beide den Vorgang, der beispielsweise beim Aufwickeln bzw. Aufrollen einer Stoffbahn zu einer Stoffrolle durchgeführt wird.

Sofern nichts anderes angegeben wurde, werden als Wärmeleitfähigkeit im Rahmen dieser Erfindung die bei 10 °C mit einem handelsüblichen Wärmestrommesser bestimmten bzw. errechneten Werte angesehen. Der Begriff der Temperaturbeständigkeit ist dem Fachmann geläufig, wobei die obere Temperaturanwendungsgrenze Auskunft über diese Eigenschaft gibt. Ein genaues Messverfahren muss im Rahmen der vorliegenden Erfindung nicht angegeben werden, da zur Bestimmung von Unterschieden jedes Verfahren gleichermaßen geeignet ist, so lange sämtliche Werkstoffe unter den gleichen Bedingungen vermessen werden.

Bei der Herstellung erfindungsgemäßer Hochtemperaturisolierungen wird die Trägerschicht zunächst zu einer ersten Wicklung gerollt, sodass die innenliegende Wicklung der Trägerschicht den innenliegenden Hohlraum des späteren rohrförmigen Grundkörpers in Umfangsrichtung umgibt, wobei der Kreisumfang des innenliegenden Hohlraums zumindest 50 mm beträgt, was für die beabsichtigten Anwendungen als Rohrisolierung notwendig ist und sich kleinere Hochtemperaturisolierungen nicht zuverlässig bzw. wirtschaftlich sinnvoll in erfindungsgemäßer Weise ausführen lassen. In einigen Fällen, üblicherweise abhängig vom Aufrollverhalten der Trägerschicht, ist es bevorzugt, diese erste Wicklung dadurch zu fixieren, dass das freie Ende der Trägerschicht am Punkt des Ringschlusses der ersten Wicklung (bzw. an der Kontaktfläche) durch gebräuchliche Befestigungsmethoden, beispielsweise Kleben, Schweißen, Nieten und/oder außenliegende Zwingen, an der Trägerschicht befestigt wird. Entsprechend sind Hochtemperaturisolierungen bevorzugt, wobei die innenliegende Wicklung durch Befestigungsmittel fixiert wurde.

Anschließend wird die Trägerschicht gemeinsam mit einer an der Trägerschicht, bzw. genauer der Außenseite der ersten Wicklung der Trägerschicht, angebrachten ersten Dämmschicht so weit aufgerollt, bis die erste Dämmschicht vollständig aufgerollt wurde. Dieser Vorgang wird mit der zweiten, dritten und jeder weiteren Dämmschicht bis zum Erhalt des gesamten rohrförmigen Grundkörpers bzw. der fertigen Hochtemperaturisolierung fortgesetzt. Dadurch entsteht eine gewickelte rohrförmige Hochtemperaturisolierung, in der die Dämmschichten in den Zwischenräumen zwischen den Wicklungen der Trägerschicht angeordnet sind und dabei in radiale Richtung jeweils innen und außen mit der Trägerschicht in Kontakt stehen. In der Seitenansicht dieser gewickelten, rohrförmigen Hochtemperaturisolierung, bzw. im Querschnitt, zeigt sich für die Trägerschicht ein spiralförmiger Verlauf, sodass die Trägerschicht als spiralförmig gewickelt bezeichnet werden kann, wobei jeder vollständige Umlauf des Kreisumfanges als eine Wicklung bezeichnet wird. Die bei der Herstellung verwendeten Bahnen der unterschiedlichen Dämmschichten sind notwendigerweise kürzer als die gesamte Trägerschicht, wobei die in der Trägerschicht angeordneten Dämmschichten zumindest so lang sind, dass sie in dem von der Trägerschicht gebildeten rohrförmigen Grundkörper entlang der jeweils durch Wicklung vorgegebenen Kreisbahn eine Länge aufweisen, die zumindest 80 % des Kreisumfangs des innenliegenden Hohlraums des rohrförmigen Grundkörpers entspricht. Hierdurch und bedingt durch den Umstand, dass die Trägerschicht, die erste Dämmschicht, die zweite Dämmschicht und die dritte Dämmschicht erfindungsgemäß jeweils aus unterschiedlichen Materialien bestehen und/oder unterschiedliche Wärmeleitfähigkeiten aufweisen, entsteht eine mehrschichtige Hochtemperaturisolierung, in welcher in radialer Richtung eine Vielzahl von Schichten unterschiedlicher Materialien übereinander angeordnet sind, die durch die spiralförmige Wicklung der Trägerschicht fixiert werden.

Geeignete Materialien für die Trägerschicht und die Dämmschichten sind dem Fachmann grundsätzlich bekannt. Hierbei ist anzumerken, dass Metallschichten zwar prinzipiell als dämmtechnische Schichten angesehen werden können, im Sinne der vorliegenden Erfindung aber keine Dämmschichten sind, so dass eine erfindungsgemäße Hochtemperaturisolierung zumindest drei voneinander verschiedene, nicht-metallische bzw. nicht vollständig metallische Dämmschichten umfasst. Erfindungsgemäß bestehen die Trägerschicht und die Dämmschichten, d.h. auch jede der drei Dämmschichten untereinander, aus unterschiedlichen Materialien und/oder weisen unterschiedliche Wärmeleitfähigkeiten und/oder Temperaturbeständigkeiten auf. Eine Hochtemperaturisolierung aus einer SiO₂-basierten Trägerschicht und drei SiO₂-basierten Dämmschichten kann somit beispielsweise erfinderisch sein obwohl sie in chemischer Hinsicht aus den gleichen Materialien bestehen, sofern sich die Materialeigenschaften, beispielsweise bedingt durch unterschiedliche Materialstrukturen, oder die Wärmeleitfähigkeiten dieser Schichten, beispielsweise bedingt durch unterschiedliche Porositäten, unterscheiden. Die unterschiedliche Wärmeleitfähigkeit einer Dämmschicht kann dabei prinzipiell auch dadurch entstehen, dass zwei unterschiedliche Materialien zusammen als eine Dämmschicht verwendet werden, wobei das gemäß ihrem Anteil an der Schicht gewichtete Mittel der Wärmeleitfähigkeit für die Bestimmung herangezogen wird, ob eine unterschiedliche Wärmeleitfähigkeit vorliegt. Da Wärmeleitfähigkeiten von Materialien fertigungsbedingt immer einer gewissen Schwankung unterliegen, werden Unterschiede in der Wärmeleitfähigkeit von weniger als 0,5 % im Rahmen der Erfindung nicht als unterschiedliche Wärmeleitfähigkeit verstanden.

Bezogen auf den rohrförmigen Grundkörper bzw. die Hochtemperaturisolierung meint der Ausdruck innenliegend bzw. radial innenliegend immer den Punkt, der radial näher am Mittelpunkt des durch die erste Wicklung der Trägerschicht beschriebenen Kreises liegt, d.h. der Grundfläche des Hohlraums, in dem später das zu isolierende Rohr angeordnet ist.

Die erfindungsgemäße Hochtemperaturisolierung wird in der späteren Anwendung beispielsweise auf das zu isolierende Rohr aufgestülpt oder aufgezogen und kann alternativ auch durch das Auftrennen des rohrförmigen Grundkörpers entlang der Längsachse zu einer Manschette ausgebildet werden, die um das zu isolierende Rohr herumgelegt und dort befestigt werden kann.

Erfindungsgemäße Hochtemperaturisolierungen weisen durch die vorstehend beschriebene Struktur zahlreiche Vorteile gegenüber dem Stand der Technik auf uns sind dabei besonders effizient, einfach und kostengünstig herzustellen. Die erfindungsgemäße Anordnung resultiert insbesondere in einem abgestuften, unsteten Verlauf der Wärmeleitfähigkeiten entlang der radialen Richtung durch die Hochtemperaturisolierung sowie in einer vergleichsweise hohen Zahl an Materialgrenzen bzw. Grenzflächen. Die erfindungsgemäße Hochtemperaturisolierung hat sich in eigenen Versuchen als besonders effektive Temperaturisolierung erwiesen und ermöglicht es gegenüber vielen Dämmmaterialien aus dem Stand der Technik, bei insgesamt gleicher Dämmwirkung entweder dünnere und leichtere Dämmschichten zu verwenden oder bei gleicher Dicke günstigere Materialien mit unvorteilhafterer Wärmeleitfähigkeit einzusetzen. Ohne an diese Theorie gebunden sein zu wollen, wird vermutet, dass dies durch das besondere radiale Temperaturprofil bedingt ist, welches sich beim Einsatz der Hochtemperaturisolierung in dem beschriebenen Aufbau einstellt und in dem die erste Ableitung der Temperatur nach dem Radius wohl durch eine unstete Funktion beschrieben werden kann. Insbesondere ermöglicht es die erfindungsgemäße Hochtemperaturisolierung dem Fachmann durch ihren innovativen Aufbau, eine besonders präzise Einstellung der thermischen Eigenschaften der Hochtemperaturisolierung und damit eine gezielte Manipulation des zu erwartenden Temperaturverlaufs.

Vorteilhafterweise hat sich gezeigt, dass erfindungsgemäße Hochtemperaturisolierungen auch eine besonders gute Schalldämmung ermöglichen, was ebenfalls auf die hohe Zahl an Materialgrenzen zwischen den verschiedenen Materialien zurückgeführt wird. Dies ist insbesondere bei der Isolation von Rohren in bewohnten Gebieten besonders günstig.

Durch die vielschichtige Anordnung verschiedener Materialien wird es, auch unabhängig von den thermischen Eigenschaften der einzelnen Schichten, möglich, besonders leicht wünschenswerte Materialeigenschaften in der Hochtemperaturisolierung zu erzeugen, indem verschiedene Werkstoffe und Funktionsmaterialien miteinander kombiniert werden, um beispielsweise besonders hohe Feuerfestigkeiten, Säurebeständigkeit oder Schnittfestigkeiten zu erzielen. Beispielsweise haben sich entsprechende mehrlagige Hochtemperaturmaterialien mit verschiedenen Schichten unterschiedlicher Materialien als besonders widerstandfähig gegen eine orthogonale Perforation erwiesen, wodurch die isolierten Rohrleitungen zusätzlich geschützt werden. Dieser Effekt, der in gewisser Weise mit dem Wirkprinzip einer modernen Verbundpanzerung verglichen werden kann, ist besonders nützlich für Anwendungen, in denen es zu einer erhöhten Exposition mit scharfen Partikeln, Splittern oder Druckwellen, die durch explosionsartige Entflammung entstehen können, kommt.

Bevorzugt ist eine erfindungsgemäße Hochtemperaturisolierung (vorzugsweise wie vorstehend als bevorzugt bezeichnet), umfassend eine spiralförmig zu einem rohrförmigen Grundkörper gewickelte Trägerschicht mit fünf oder mehr Wicklungen und vier oder mehr unterschiedliche Dämmschichten, da die vorstehend beschriebenen Vorteile, bedingt durch die höhere Zahl an Materialgrenzen bzw. Grenzflächen zwischen den Schichten, noch ausgeprägter sind. In diesem Fall gilt, dass die Trägerschicht, die erste Dämmschicht, die zweite Dämmschicht, die dritte Dämmschicht und die vierte Dämmschicht jeweils aus unterschiedlichen Materialien bestehen und/oder unterschiedliche Wärmeleitfähigkeiten und/oder unterschiedliche Temperaturbeständigkeiten aufweisen.

Bevorzugt ist eine erfindungsgemäße Hochtemperaturisolierung (vorzugsweise wie vorstehend als bevorzugt bezeichnet), wobei die radial innenliegende Oberfläche und/oder die radial außenliegende Oberfläche der Hochtemperaturisolierung durch die Trägerschicht gebildet wird. Entsprechende Hochtemperaturisolierung sind besonders leicht zu fertigen, da der rohrförmige Grundkörper nach vollständiger Aufwicklung sämtlicher Dämmschichten besonders leicht dadurch verschlossen werden kann, dass die Trägerschicht mit sich selbst an einer vorhergehenden Wicklung verbunden wird. Bei Einsatz einer weichen oder leicht verformbaren Trägerschicht, lassen sich diese Hochtemperaturisolierung zudem besonders leicht auf ein zu isolierendes Rohr aufziehen.

Im besonders bevorzugten Fall einer metallischen Trägerschicht, bevorzugt wie nachfolgend als bevorzugt bezeichnet, ergibt sich zudem ein besonders positiver optischer und haptischer Eindruck und regelmäßig eine besonders gute Beschichtbarkeit der Oberfläche. Als günstig kann sich auch erweisen, dass hierbei durch die in der Hochtemperaturisolierung verlaufende durchgehende Trägerschicht ein leitender elektrischer Kontakt zwischen dem innenliegenden Rohr und der Außenseite der Hochtemperaturisolierung besteht, beispielsweise um die elektrostatische Aufladung von andernfalls nicht geerdeten Bauteilen zu vermeiden.

Bei Verwendung einer metallischen oder einer hydrophob imprägnierten Trägerschicht ergibt sich bei dieser Ausführungsform eine besonders hohe Beständigkeit gegen Witterungseinflüsse und das Eindringen von Feuchtigkeit. Insbesondere das Eindringen von Feuchtigkeit in die Isolierung (üblicherweise außerhalb des Hochtemperaturbetriebs) ist dabei regelmäßig besonders nachteilig für die Haltbarkeit von Hochtemperaturisolierungen und deren langfristige Dämmwirkung.

Besonders vorteilhaft ist auch, dass bei Verwendung geeigneter, nicht-staubender Trägerschichten, insbesondere metallischer Trägerschichten, bevorzugt wie nachfolgend als bevorzugt bezeichnet, die häufig besonders stark staubenden Dämmschichten durch eine nicht-staubende Trägerschicht von der Außenwelt abgeschirmt werden, wodurch bei der Herstellung und der Verarbeitung entsprechender Hochtemperaturisolierungen die Verschmutzung der Umgebung minimiert und die Arbeitssicherheit vorteilhaft erhöht wird.

Bevorzugt ist eine erfindungsgemäße Hochtemperaturisolierung (vorzugsweise wie vorstehend als bevorzugt bezeichnet), wobei die Dämmschichten und die Trägerschicht gegeneinander verschiebbar angeordnet sind, und/oder wobei die Dämmschichten nur durch die Spannung zwischen zwei Wicklungen der Trägerschicht fixiert werden, und/oder wobei die Dämmschichten und die Trägerschicht nicht durch zusätzliche Befestigungsmittel miteinander verbunden sind. Entsprechende Hochtemperaturisolierungen sind ganz besonders bevorzugt, weil in ihnen die verschiedenen Lagen der Dämmschichten nicht fest mit der Trägerschicht verbunden sind und dadurch eine besonders flexible Struktur gebildet wird, die sich besonders leicht an eine Rohrleitung anpassen lässt. Insbesondere sind dadurch leichte Aufweitungen des Innendurchmessers möglich, wodurch die Befestigung der Hochtemperaturisolierung signifikant erleichtert wird. Der flexible Aufbau ermöglicht einen besonders leichten Transport und eine sehr platzsparende Lagerung. Die entsprechenden Hochtemperaturisolierungen können nämlich durch eine orthogonal zur Oberfläche ausgeübte Kraft problemlos so komprimiert werden, dass der Hohlraum im rohrförmigen Grundkörper zusammengedrückt wird, sodass er verschwindet. Dadurch ist die Raumausfüllung optimiert und das Lagervolumen minimiert. Besonders vorteilhaft ist, dass sich eine derart flexible Hochtemperaturisolierung nach der Lagerung rückstandslos wieder in die Rohrform überführen lässt, ohne dass im Grundkörper durch die Lagerung Schwachstellen verbleiben würden, die die Isolierwirkung oder die Haltbarkeit einschränken würden. Zudem wird auch die Bearbeitbarkeit der entsprechenden Hochtemperaturisolierung deutlich verbessert, insbesondere beim Zuschneiden der Elemente, da durch die auftretende mechanische Belastung keine Nähte, Schweißpunkte oder Klebestellen zwischen den Schichten aufgetrennt oder Beschädigt werden können. Ganz besonders vorteilhaft ist, dass sich entsprechende Hochtemperaturisolierungen auch als Einlage bzw. Innen- oder Außenverkleidung für Behältnisse nutzen lassen, da sie sich besonders leicht an eine äußere Form oder einen inneren Kern anpassen lassen, insbesondere wenn die losen Enden der Trägerschicht an der Innenseite und/oder der Außenseite der Hochtemperaturisolierung nicht oder beweglich an der Trägerschicht fixiert sind, was in diesen Fällen besonders bevorzugt sein kann. Entsprechend ist es situativ ganz besonders bevorzugt, wenn die freien Enden der Trägerschicht nur an der Innenseite oder nur an der Außenseite, bevorzugt weder an der Innen- noch an der Außenseite, des rohrförmigen Grundkörpers fest, d.h. ohne Krafteinwirkung nicht-lösbar, mit der Trägerschicht verbunden sind.

Bevorzugt ist eine erfindungsgemäße Hochtemperaturisolierung (vorzugsweise wie vorstehend als bevorzugt bezeichnet), wobei die in der Trägerschicht angeordneten Dämmschichten entlang der jeweils durch Wicklung vorgegebenen Kreisbahn eine Länge aufweisen, die zumindest 90 %, bevorzugt zumindest 100 %, besonders bevorzugt zumindest 110 %, zudem bevorzugt weniger als 600 %, besonders bevorzugt weniger als 400%, ganz besonders bevorzugt weniger als 200 %, noch weiter bevorzugt weniger als 150 %, des Kreisumfangs des rohrförmigen Grundkörpers entspricht. Entsprechende Hochtemperaturisolierungen sind bevorzugt, weil sich entsprechende Längen der Dämmschichten als besonders guter Kompromiss zwischen einer guten Isolierwirkung und einer guten Verarbeitbarkeit erwiesen haben.

Bevorzugt ist eine erfindungsgemäße Hochtemperaturisolierung (vorzugsweise wie vorstehend als bevorzugt bezeichnet), wobei die Dämmschichten jeweils mit zumindest einer weiteren Dämmschicht auf Stoß gegeneinander anliegen, wobei bevorzugt die Stöße zwischen den verschiedenen Dämmschichten über den Umfang des rohrförmigen Grundkörpers versetzt angeordnet sind. Entsprechende Hochtemperaturisolierungen sind bevorzugt, weil sich in diesen keine größeren Hohlräume bilden, die Dämmmateriallage im Kontaktbereich aber auch nicht durch Überlappung der Dämmschichten uneben wird. In der bevorzugten Ausführungsform wird vermieden, dass die Stöße (als relative Schwachstellen im Verbund) in einer Flucht angeordnet sind, wodurch ein für Wärmetransport und Perforation besonders anfälliger Materialabschnitt entstünde. Im Sinne der vorliegenden Erfindung und in Übereinstimmung mit dem fachmännischen Verständnis, liegen zwei Schichten dann auf Stoß, wenn sich ihre Seitenkannten bündig berühren, ohne dass die Schichten überlappen. Entsprechend sind Stöße die Stellen, an denen sich zwei Schichten mit ihren Seitenkannten bündig berühren, ohne dass die Schichten überlappen.

Bevorzugt ist eine erfindungsgemäße Hochtemperaturisolierung (vorzugsweise wie vorstehend als bevorzugt bezeichnet), wobei die Trägerschicht durch eine Vielzahl von einzelnen Trägerschichtelementen gebildet wird, die miteinander auf Stoß anliegenden oder überlappen. Entsprechende Hochtemperaturisolierungen sind in Einzelfällen bevorzugt, weil durch die segmentierte Trägerschicht, d.h. durch die aus Teilstücken des gleichen Materials zusammengesetzte Trägerschicht, ein Wärmetransport, oder im Falle einer metallischen Trägerschicht auch eine elektrische Leitung, durch die Hochtemperaturisolierung verhindert wird, die sonst durch eine solide, gewickelte Trägerschicht an den Dämmschichten vorbei erfolgen könnte. Der besonders bevorzugte Normalfall ist aber die solide, d.h. einstückige, Trägerschicht.

Bevorzugt ist eine erfindungsgemäße Hochtemperaturisolierung (vorzugsweise wie vorstehend als bevorzugt bezeichnet), wobei die Trägerschicht eine Dicke von 0,05 bis 5,0 mm, bevorzugt 0,05 bis 3,0 mm, besonders bevorzugt 0,05 bis 1,0 mm aufweist, da sich diese Trägerschichten besonders gut verarbeiten lassen.

Bevorzugt ist eine erfindungsgemäße Hochtemperaturisolierung (vorzugsweise wie vorstehend als bevorzugt bezeichnet), wobei die Trägerschicht aus einer Metallfolie oder einer unbeschichteten Glasgewebefolie oder einer beschichteten Glasgewebefolie, bevorzugt einer Metallfolie oder einer beschichteten Glasgewebefolie, besonders bevorzugt einer Aluminiumfolie, Titanfolie, Edelstahlfolie oder einer beschichteten Glasgewebefolie, ganz besonders bevorzugt aus einer Aluminiumfolie oder einer beschichteten Glasgewebefolie, deren Beschichtung einen silikonbasierten Lack und Metallflocken, insbesondere Aluminiumflocken, umfasst, besteht. Entsprechende Hochtemperaturisolierungen sind bevorzugt, da sich die Materialien wegen ihrer Materialeigenschaften für das offenbarte Herstellungsverfahren als besonders geeignet erwiesen haben. Zudem sorgen diese Materialien nicht nur für eine stabile Fassung der Dämmschichten, sondern leisten auch selbst einen Beitrag zu der Gesamtdämmwirkung der Hochtemperaturisolierung, wobei insbesondere Metallfolien durch die Reflektion von Strahlung einen nicht unerheblichen Beitrag leisten, der sich beispielsweise besonders günstig mit der Dämmwirkung von typischen Dämmstoffen wie Glasnadelmatte, Glaswolle und Steinwolle ergänzt, sodass ein synergistischer Effekt entsteht. Metallische Trägerschichten und entsprechend imprägnierte Glasgewebefolien erhöhen vorteilhafterweise die Witterungsbeständigkeit der Hochtemperaturisolierung. Die bevorzugten Materialien sind besonders beständig und, sofern sichtbar, optisch besonders ansprechend. Aluminium bietet dabei zudem den Vorteil des leichten Gewichts, bei ansonsten besonders positiven Eigenschaften, insbesondere hinsichtlich der Reflektion von Strahlung.

Bevorzugt ist eine erfindungsgemäße Hochtemperaturisolierung (vorzugsweise wie vorstehend als bevorzugt bezeichnet), wobei die Trägerschicht als Dampfsperre fungiert oder die Trägerschicht derart perforiert ist, dass sie den Durchtritt von Wasserdampf erlaubt. Entsprechende Hochtemperaturisolierungen sind bevorzugt, da Wasserdampf auf dem Weg radial durch die Hochtemperaturisolierung zumindest durch vier Lagen der Trägerschicht hindurchtreten muss. Dadurch ist es möglich, durch die Ausbildung der Trägerschicht sehr genau einzustellen, ob und wieviel Wasserdampf durch die Hochtemperaturisolierung hindurchtreten kann.

Bevorzugt ist eine erfindungsgemäße Hochtemperaturisolierung (vorzugsweise wie vorstehend als bevorzugt bezeichnet), wobei die Dämmschichten eine Dicke von 0,5 bis 25 mm, bevorzugt 1 bis 12 mm aufweisen, da sich diese Dämmschichten besonders gut verarbeiten lassen und gleichzeitig in einer erfindungsgemäßen Hochtemperaturisolierung regelmäßig eine hinreichende Dämmwirkung entfalten.

Bevorzugt ist eine erfindungsgemäße Hochtemperaturisolierung (vorzugsweise wie vorstehend als bevorzugt bezeichnet), wobei zumindest eine, bevorzugt zumindest zwei, besonders bevorzug zumindest drei der Dämmschichten aus zwei oder mehr verschiedenen Materialien bestehen, wobei bevorzugt eines der Materialien eine Glimmerfolie und/oder eine Prepreqfolie und/oder eine Kunststofffolie, die beim Erhitzen eine Klebewirkung entwickelt, ganz besonders bevorzugt eine Kunststofffolie, die beim Erhitzen eine Klebewirkung entwickelt, ist. Entsprechende Hochtemperaturisolierungen sind bevorzugt, weil die entsprechenden Folien im Inneren der Hochtemperaturisolierung liegen und die Glimmerfolie beispielsweise für einen ganz besonders guten Brandschutz sorgt. Mit Nachdruck bevorzugt sind die Ausführungsformen, in denen eine Kunststofffolie in der Hochtemperaturisolierung existiert, die beim Erhitzen eine Klebewirkung entwickelt. Diese Hochtemperaturisolierungen sind nämlich zwar anfangs flexibel und formbar (mit den vorstehend beschriebenen Vorteilen) können aber durch Wärmebehandlung und anschließendes Aushärten des Kunststoffes von innen heraus versteift und ggf. sogar in bestimmten Formen oder Geometrien fixiert werden. Dieses innovative Konzept verbessert und erleichtert die Verarbeitbarkeit erheblich und schafft zahlreich neue Anwendungsmöglichkeiten.

Bevorzugt ist eine erfindungsgemäße Hochtemperaturisolierung (vorzugsweise wie vorstehend als bevorzugt bezeichnet), wobei zumindest eine, bevorzugt zumindest zwei, besonders bevorzug zumindest drei der Dämmschichten ein brennbares oder unbrennbares, bevorzugt unbrennbares, Material umfassen, welches anorganisch oder organisch, bevorzugt anorganisch, ist, wobei das Material besonders bevorzugt eine Mineralwollmatte ist, und/oder wobei zumindest eine, bevorzugt zumindest zwei, besonders bevorzug zumindest drei der Dämmschichten ein Hybridmaterial, bevorzugt eine hydrophob imprägnierten Matte, besonders bevorzugt eine mit einer SiO2-basierten hydrophoben Imprägnierung imprägnierte Matte, umfassen. Entsprechende Hochtemperaturisolierungen sind bevorzugt, weil es sich bei diesen Dämmschichten um besonders bewährte Materialien mit guten Verarbeitungseigenschaften und einer guten Dämmwirkung handelt, sodass entsprechende Hochtemperaturisolierungen anderen Isolierungen mit anderen Materialien hinsichtlich ihrer Dämmwirkung häufig überlegen sind.

Bevorzugt ist eine erfindungsgemäße Hochtemperaturisolierung (vorzugsweise wie vorstehend als bevorzugt bezeichnet), wobei die Wärmeleitfähigkeit der einzelnen Dämmschichten im Vergleich zueinander radial von außen nach innen abnimmt oder zwischen höheren und tieferen Wärmeleitfähigkeiten alterniert und/oder wobei die Temperaturbeständigkeiten der einzelnen Dämmschichten im Vergleich zueinander radial von außen nach innen abnimmt oder zwischen höheren und tieferen Temperaturbeständigkeiten alterniert. Entsprechende Hochtemperaturisolierungen sind bevorzugt, weil die innenliegenden Dämmschichten mit dem heißen Rohr in Kontakt stehen und daher den höchsten Temperaturen ausgesetzt sind, sodass niedrige Wärmeleitfähigkeiten und hohe Temperaturbeständigkeiten in den innenliegenden Dämmschichten besonders effektiv isolieren und zudem zu einer hohen Beständigkeit führen. Ganz besonders bevorzugt ist die Ausführungsform mit alternierenden Wärmeleitfähigkeiten. In dieser bevorzugten Anordnung weißt das Profil der Wärmeleitfähigkeit entlang der radialen Richtung und damit die erste Ableitung der Temperatur nach dem Radius einen besonders unsteten Verlauf und besonders starke Sprünge auf, wobei sich überraschend gezeigt hat, dass dies für die Leistungsfähigkeit der Hochtemperaturisolierung anscheinend besonders günstig ist.

Bevorzugt ist eine erfindungsgemäße Hochtemperaturisolierung (vorzugsweise wie vorstehend als bevorzugt bezeichnet), wobei die Hochtemperaturisolierung bei vierundzwanzigstündiger Beaufschlagung der Innenfläche mit einer Temperatur im Bereich von 90 bis 1000 °C, bevorzugt im Bereich von 100 bis 400 °C, besonders bevorzugt im Bereich von 130 bis 300°C und einer Umgebungstemperatur von 25 °C an der Außenfläche eine Temperatur von 30 bis 85° C, bevorzugt 35 bis 50 °C, besonders bevorzugt 40 bis 45 °C aufweist, wobei die Temperatur der Außenfläche ganz besonders bevorzugt unter 60 °C bleibt. Entsprechende Hochtemperaturisolierungen sind bevorzugt, weil sie auf die spezifischen Anforderungen hin optimiert wurden, die bei der Isolierung von überirdisch und/oder unterirdisch und/oder unterseeisch geführten Rohrleitungen für Fluide mit einer Temperatur von mehr als 100 °C, bevorzugt von mehr als 200 °C auftreten. Eine geringere Isolierwirkung würde in der Praxis als unzureichend angesehen. Eine darüberhinausgehende Isolierwirkung der Hochtemperaturisolierung wäre jedoch ebenfalls weniger günstig, da sich in eigenen Kalkulationen gezeigt hat, dass eine solche hinsichtlich Materialbedarf und Herstellungskosten für die üblicherweise sehr ausgedehnten Rohrleitungssysteme regelmäßig unwirtschaftlich und in vielen Fällen zudem nicht nötig ist.

Bevorzugt ist eine erfindungsgemäße Hochtemperaturisolierung (vorzugsweise wie vorstehend als bevorzugt bezeichnet), zusätzlich umfassend eine Ummantelung des rohrförmigen Grundkörpers, bevorzugt bestehend aus einem Kunststoff, besonders bevorzugt einem duroplastischen oder thermoplastischen Kunststoff oder Kunststoffschaum, ganz besonders bevorzugt bestehend aus einem Kunststoff ausgewählt aus der Gruppe bestehend aus Polyurethan, PET, Melaminharze, Epoxide, Phenolharze, thermoplastische Elastomer und Nitrilkautschuk und/oder eine auf der Oberfläche des rohrförmigen Grundkörpers angeordnete Glimmerfolie und/oder Kunststofffolie. Entsprechende Hochtemperaturisolierungen sind bevorzugt, weil sich mit ihnen die Oberflächeneigenschaften der Hochtemperaturisolierungen ganz präzise an die Anforderungen einer spezifischen Anwendung anpassen lassen. Beispielsweise lassen sich durch eine Ummantelung mit Glimmerfolie besonders vorteilhafte Brandschutzeigenschaften erzielen, wohingegen beispielsweise eine Polyurethanummantelung einen weiteren Beitrag zur Isolierung liefert und die Hochtemperaturisolierung gleichzeitig gegen äußere Einflüsse, z.B. mechanische Belastung, schützt.

Bevorzugt ist eine erfindungsgemäße Hochtemperaturisolierung (vorzugsweise wie vorstehend als bevorzugt bezeichnet), wobei der rohrförmige Grundkörper durch Befestigung des Endes der Trägerschicht an der radial außenliegenden Seite einer vorhergehenden Wicklung der Trägerschicht fixiert wird, und/oder wobei die Stirnseiten des rohrförmigen Grundkörpers mit einer Dichtblende verkleidet sind, wobei die Dichtblende bevorzugt aus dem gleichen Material besteht, wie die Trägerschicht und/oder aus einem hochkompressiblen Material mit einer Dichte von 10-200 kg/m³, bevorzugt 40-130 kg/ m³, besteht. Entsprechende Hochtemperaturisolierungen sind bevorzugt, weil diese Maßnahmen zu einer besonderen Stabilität des Schichtverbundes führen und einen großen Beitrag dazu leisten, die innenliegenden Teile der Hochtemperaturisolierung vor Witterungseinflüssen zu schützen. Diese regelmäßig als optisch besonders ansprechend empfundene Ausgestaltung ermöglicht zudem eine besonders sichere Verarbeitung der Hochtemperaturisolierungen, da verhindert wird, dass Arbeiter mit den Dämmschichten in Kontakt kommen, die beispielsweise durch eine Staubentwicklung andernfalls eine größere Herausforderung für den Arbeitsschutz wären. Die Verwendung eines hochkompressiblen Materials als Dichtblende ist besonders vorteilhaft, weil die vorstehend beschriebenen Vorteile in der Lagerung der Hochtemperaturisolierung besonders gut erhalten bleiben, da auch die Dichtblende für die Lagerung komprimiert werden kann, ohne die Struktur der Hochtemperaturisolierung im späteren Einsatz zu beinträchtigen.

Bevorzugt ist eine erfindungsgemäße Hochtemperaturisolierung (vorzugsweise wie vorstehend als bevorzugt bezeichnet), wobei die Hochtemperaturisolierung so ausgestaltet ist, dass sie als Manschette um ein Rohr gelegt und an diesem befestigt werden kann. Entsprechende Hochtemperaturisolierungen sind ganz besonders bevorzugt, weil die Anbringung in Form einer Manschette nicht nur eine besonders wirtschaftliche und schnelle Methode ist, eine Hochtemperaturisolierung anzubringen, sondern auch noch besonders einfach ist, sodass sie auch von schlecht ausgebildeten und/oder ausgerüsteten Arbeitern, beispielsweise in strukturschwachen Regionen, leicht angebracht werden können. Besonders vorteilhaft ist, dass sich trotz anfänglicher Vorbehalte überraschenderweise gezeigt hat, dass erfindungsgemäße Hochtemperaturisolierungen völlig problemlos so ausgestaltet werden können, dass sie als Manschette um ein Rohr gelegt und an diesem befestigt werden können. Der Fachmann muss dazu lediglich den rohrförmigen Grundkörper entlang der axialen Richtung (Längsrichtung) auftrennen, wobei dieser Arbeitsschritt mit gebräuchlichen Werkzeugen erfolgen kann. Eine zusätzliche Fixierung der Schichtstruktur an den nunmehr freien Enden an der Schnittlinie ist regelmäßig nicht notwendig, kann aber vorteilhaft sein, insbesondere, wenn ohnehin zusätzliche Verschlusselemente an der Hochtemperaturisolierung angebracht werden, mit denen die Manschette später verschließbar ist.

Die Erfindung betrifft zudem ein Verfahren zur Herstellung einer Hochtemperaturisolierung zur Wärmedämmung von Rohren, bevorzugt einer erfindungsgemäßen Hochtemperaturisolierung, besonders bevorzugt wie vorstehend als bevorzugt bezeichnet, umfassend die Schritte:
A Bereitstellen einer bahnförmigen Trägerschicht,
B Aufrollen oder Aufwickeln der Trägerschicht zum Erzeugen einer ersten Wicklung,
C. Bereitstellen einer ersten bahnförmigen Dämmschicht auf der Innenseite der Trägerschicht und Fixierung des Endes der ersten Dämmschicht zwischen den zwei Lagen der Trägerschicht am Kontaktpunkt der ersten Wicklung,
D. Aufrollen oder Aufwickeln der Trägerschicht zum Erzeugen weiterer Wicklungen bis die gesamte Länge der ersten bahnförmigen Dämmschicht mit der Trägerschicht zusammen aufgerollt wurde,
E. Bereitstellen einer zweiten bahnförmigen Dämmschicht auf der Innenseite der Trägerschicht und Anlegen dieser Dämmschicht auf Stoß oder überlappend mit der ersten bahnförmigen Dämmschicht,
F. Aufrollen oder Aufwickeln der Trägerschicht zum Erzeugen weiterer Wicklungen bis die gesamte Länge der zweiten bahnförmigen Dämmschicht mit der Trägerschicht zusammen aufgerollt wurde,
G. Bereitstellen einer dritten bahnförmigen Dämmschicht auf der Innenseite der Trägerschicht und Anlegen dieser Dämmschicht auf Stoß oder überlappend mit der zweiten bahnförmigen Dämmschicht,
H. Aufrollen oder Aufwickeln der Trägerschicht zum Erzeugen weiterer Wicklungen bis die gesamte Länge der dritten bahnförmigen Dämmschicht mit der Trägerschicht zusammen aufgerollt wurde,

wobei die bahnförmigen Dämmschichten jeweils eine Länge aufweisen, die zumindest 80 % des Kreisumfanges der ersten Wicklung entspricht, und
wobei die Trägerschicht, die erste Dämmschicht, die zweite Dämmschicht und die dritte Dämmschicht jeweils aus unterschiedlichen Materialien bestehen und/oder unterschiedliche Wärmeleitfähigkeiten aufweisen und/oder unterschiedliche Temperaturbeständigkeiten aufweisen.

Dieses Verfahren ist vorteilhaft, weil es besonders einfach ausgeführt werden kann, nur geringe apparative Anforderungen stellt und zu besonders leistungsfähigen und vorteilhaften Produkten führt. Im Lichte der vorstehenden Offenbarung und in Kenntnis der Erfindung kann der Fachmann die im Stand der Technik bekannten Wickelverfahren für Werkstoffe, wie sie beispielsweise in der EP 2168756 A1 offenbart sind, zuverlässig an das erfindungsgemäße Verfahren anpassen.

Die erste Wicklung der Trägerschicht kann in einigen Fällen, abhängig vom Aufrollverhalten der Trägerschicht, bevorzugt dadurch fixiert werden, dass das freie Ende der Trägerschicht am Punkt des Ringschlusses der ersten Wicklung durch gebräuchliche Befestigungsmethoden, beispielsweise Kleben, Schweißen, Nieten und/oder außenliegende Zwingen, an der Trägerschicht befestigt wird. Entsprechend sind Verfahren bevorzugt, wobei die erste Wicklung durch Befestigungsmittel fixiert wurde.

Im Sinne der vorliegenden Erfindung umfasst das Bereitstellen einer bahnförmigen Schicht auch das Herstellen einer bahnförmigen Schicht im Laufe des Verfahrens, beispielsweise wenn ein späteres Hybridmaterial erst während des Verfahrens imprägniert oder ausgehärtet wird. Im Sinne der vorliegenden Erfindung ist die Innenseite der Trägerschicht die Seite, die beim Fortsetzen des Aufrollvorganges am rohrförmigen Grundkörper radial nach innen zeigt.

Die Fixierung des Endes der ersten Dämmschicht zwischen den zwei Lagen der Trägerschicht am Kontaktpunkt der ersten Wicklung kann mit gebräuchlichen Befestigungsmitteln erfolgen, erfolgt aber bevorzugt über das Einklemmen der ersten Dämmschicht zwischen den zwei Lagen der Trägerschicht in dem sich verjüngenden Freiraum am Kontaktpunkt der ersten Wicklung der Trägerschicht.

Bevorzugt ist ein erfindungsgemäßes Verfahren, vorzugsweise wie vorstehend als bevorzugt bezeichnet, zusätzlich umfassend den Schritt:
R. Befestigen der Trägerschicht an der radial außenliegenden Seite einer vorhergehenden Wicklung der Trägerschicht und Abtrennen des rohrförmigen Grundkörpers von der bahnförmigen Trägerschicht.

Entsprechende Verfahren sind ganz besonders bevorzugt, weil sich gezeigt hat, dass entsprechend fixierte rohrförmigen Grundkörper besonders leicht und gründlich von den verbleibenden Teilen der bahnförmigen Trägerschicht gelöst werden können, ohne dass dieser Arbeitsschritt zu einem ungewollten Abrollen des gewickelten rohrförmigen Grundkörpers führt.

Bevorzugt ist eine erfindungsgemäßes Verfahren (vorzugsweise wie vorstehend als bevorzugt bezeichnet), zusätzlich umfassend den Schritt:
S. Auftrennen der hergestellten Hochtemperaturisolierung mit einem Trennwerkzeug zum Herstellen einer manschettenförmigen Hochtemperaturisolierung.

Entsprechende Verfahren sind ganz besonders bevorzugt, weil die Anbringung von Hochtemperaturisolierungen in Form einer Manschette, wie vorstehend erläutert, ganz besonders vorteilhaft ist und die Hochtemperaturisolierungen mit dem bevorzugten Verfahren völlig problemlos so ausgestaltet werden können, dass sie als Manschette um ein Rohr gelegt und an diesem befestigt werden können.

Es ist für den Fachmann leicht ersichtlich, dass ganz besonders bevorzugte Verfahren die Herstellung von bevorzugten erfindungsgemäßen Hochtemperaturisolierungen betreffen, sodass die vorstehend für erfindungsgemäße Hochtemperaturisolierungen als bevorzugt bezeichneten Merkmale auch auf bevorzugte erfindungsgemäße Verfahren zutreffen, wobei vorteilhafterweise besonders vorteilhafte Produkte erzeugt werden, die jeweils die vorstehend Beschriebenen Vorteile gegenüber dem Stand der Technik aufweisen.

Ein Fachmann, erkennt im Lichte der vorstehenden Ausführungen zu erfindungsgemäßen Hochtemperaturisolierung und deren zahlreichen Vorteilen, dass die Erfindung auch vorteilhafte Verwendungen erfindungsgemäßer Hochtemperaturisolierungen betrifft.

Die Erfindung betrifft beispielsweise die Verwendung einer erfindungsgemäßen Hochtemperaturisolierung, bevorzugt wie vorstehend als bevorzugt bezeichnet, als Isolierung für überirdisch und/oder unterirdisch und/oder unterseeisch geführten Rohrleitungen für Fluide mit einer Temperatur von mehr als 50 °C, bevorzugt von mehr als 100 °C, besonders bevorzugt von mehr als 200 °C. Die Erfindung betrifft zudem die Verwendung einer erfindungsgemäßen Hochtemperaturisolierung, bevorzugt wie vorstehend als bevorzugt bezeichnet, als feuerfester Brandschutz und/oder als Schallisolierung für überirdisch geführten Überlandrohrleitungen für leicht entzündliche und hochentzündliche Fluide.

Da sich erfindungsgemäße Hochtemperaturisolierungen besonders leicht als Innen- oder Außenverkleidung an die inneren oder äußeren Konturen eines Behälters anpassen lassen und neben einer wirksamen Temperaturisolierung regelmäßig auch herausragende Brandschutzeigenschaft, einen hohen Widerstand gegen mechanische Perforation (bedingt durch den Schichtaufbau) und eine hohe chemische Beständigkeit (durch die Verwendung chemisch unterschiedlicher Materialien im Schichtaufbau, mit einer großen Bandbreite an Beständigkeit) aufweisen, sind erfindungsgemäße Hochtemperaturisolierungen prädestiniert für Anwendungen in der Entsorgungswirtschaft, insbesondere für die Lagerung und/oder Entsorgung von unter Sicherheitsaspekten problematischen Materialien.

Entsprechend betrifft die Erfindung ganz besonders auch die Verwendung einer erfindungsgemäßen Hochtemperaturisolierung, bevorzugt wie vorstehend als bevorzugt bezeichnet, als Innen- und/oder Außenverkleidung, bevorzugt als Innenverkleidung, für einen Behälter, bevorzugt einen Lager-, Entsorgungs- oder Abfallbehälter, besonders bevorzugt einen Abfallbehälter für Batterien und Akkumulatoren, insbesondere für Lithium-Ionen-Akkumulatoren. Durch diese Verwendung lassen sich vorteilhafterweise aus gewöhnlichen Behältern schnell, einfach und kosteneffizient hochgradig beständige Behälter erhalten, die für die Lagerung und/oder Entsorgung von Batterien und Akkumulatoren, insbesondere verbrauchten Batterien und Akkumulatoren, oder anderer Risikoabfälle geeignet sind.

Der Fachmann erkennt, dass die Erfindung entsprechend auch einen Entsorgungsbehälter zur Aufbewahrung von Batterien und Akkumulatoren, insbesondere von Lithium-Ionen-Akkumulatoren betrifft, umfassend
einen Behälter, bevorzugt bestehend aus Kunststoff und/oder Metall, umfassend einen Boden und den Boden umgebende Seitenwände, bevorzugt einen kreisförmigen Boden und zylinderförmige Seitenwände,
wobei die Innenseite und/oder die Außenseite, bevorzugt die Innenseite, der Seitenwände zumindest teilweise, bevorzugt zu mehr als 50 %, besonders bevorzugt zu mehr als 75 %, ganz besonders bevorzugt vollständig, von einer erfindungsgemäßen Hochtemperaturisolierung, bevorzugt wie vorstehend als bevorzugt bezeichnet, bedeckt ist, sodass die Hochtemperaturisolierung als Innen- und/oder Außenverkleidung der Seitenwände des Behälters fungiert.

Bevorzugt ist ein erfindungsgemäßer Entsorgungsbehälter (vorzugsweise wie vorstehend als bevorzugt bezeichnet), wobei die erfindungsgemäße Hochtemperaturisolierung durch Befestigungsmittel an den Seitenwänden fixiert ist oder wobei die Hochtemperaturisolierung durch einen ausgehärteten Kunststoff im Inneren der Hochtemperaturisolierung in der Form der Innen- oder Außenkontur des Behälters gehalten wird.

Ebenfalls offenbart wird ein Verfahren zum Herstellen eines flachen Hochtemperaturisolierkörpers zur Ausbreitung auf einer Fläche, umfassend die Schritte:
U. Herstellen oder Bereitstellen einer erfindungsgemäßen Hochtemperaturisolierung, vorzugsweise wie vorstehend als bevorzugt bezeichnet, bevorzugt Herstellen mittels eines erfindungsgemäßen Verfahrens, vorzugsweise wie vorstehend als bevorzugt bezeichnet,
V. Auftrennen der Hochtemperaturisolierung entlang der Längsachse mit einem Trennwerkzeug zum Herstellen eines aufgetrennten Hochtemperaturisolierkörpers, und
W. Aufspreizen und Glätten des aufgetrennten Hochtemperaturisolierkörpers zum Erzeugen eines flachen Hochtemperaturisolierkörpers zur Ausbreitung auf einer Fläche.

Der mit diesem Verfahren erhaltene aufgetrennte Hochtemperaturisolierkörper lässt sich durch Merkmale nur unzureichend definieren, da seine Struktur und Schichtung maßgeblich davon abhängt, an welcher Stelle die erfindungsgemäße Hochtemperaturisolierung bei der Herstellung des flachen Hochtemperaturisolierkörpers aufgetrennt wird. Entsprechend wird ein flacher Hochtemperaturisolierkörper offenbart, welcher mit dem vorstehend angegebenen Verfahren hergestellt wurde und/oder mit dem vorstehend angegebenen Verfahren herstellbar ist.

Ebenfalls offenbart wird die Verwendung eines flachen Hochtemperaturisolierkörpers als Brandschutz zur Ausbreitung auf einer im Wesentlichen ebenen Fläche sowie als Wärmedämmung für Lüftungsanlagen und thermische Behandlungsanlagen.

Nachfolgend wird die Erfindung anhand der Figuren näher erläutert.

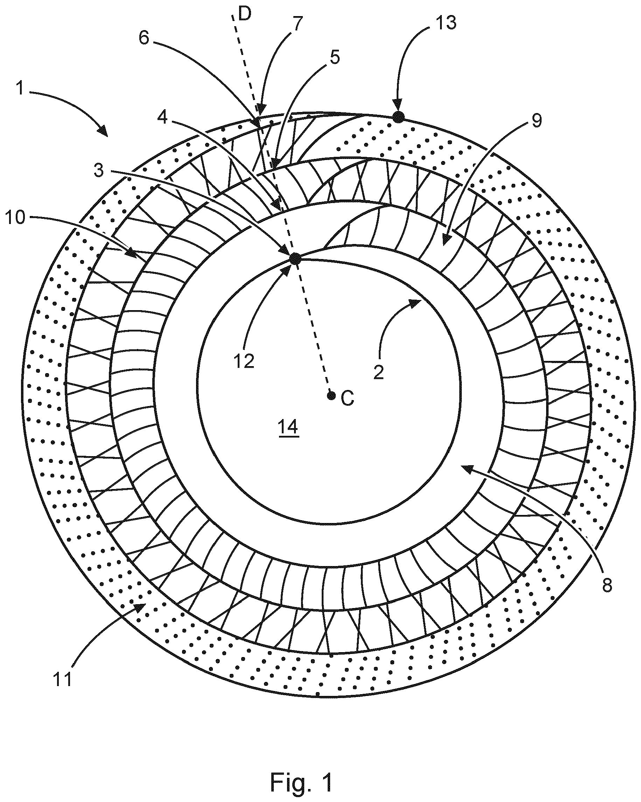

Figur 1 zeigt einen Querschnitt durch eine erfindungsgemäße Hochtemperaturisolierung 1 zur Wärmedämmung von Rohren, umfassend eine spiralförmig zu einem rohrförmigen Grundkörper gewickelte Trägerschicht 2 mit fünf Wicklungen, wobei die Wicklungen immer dann vollständig sind, wenn die in Trägerschicht beim Wickeln wieder auf Höhe des ersten Ringschlusses der ersten Wicklung 3 angekommen ist. Jede Wicklung ist damit vollständig, wenn die Trägerschicht die in Figur 1 eingetragene Hilfsachse CD schneidet, so dass die erste, zweite, dritte, vierte und fünfte Wicklung der Trägerschicht in Figur 1 an den mit 3, 4, 5, 6 beziehungsweise 7 gekennzeichneten Punkten abgeschlossen sind. Die innenliegende, d.h. erste, Wicklung der Trägerschicht 2 umgibt den innenliegenden Hohlraum 14 des rohrförmigen Grundkörpers in Umfangsrichtung, wobei der Kreisumfang des innenliegenden Hohlraums zumindest 50 mm beträgt.

In dem von der Trägerschicht 2 gebildeten rohrförmigen Grundkörper sind in Figur 1 vier verschiedene Dämmschichten 8, 9, 10, 11 in den Zwischenräumen zwischen den Wicklungen der Trägerschicht 2 angeordnet, die in radialer Richtung jeweils innen und außen mit der Trägerschicht 2 in Kontakt stehen, wobei die in der Trägerschicht 2 angeordneten Dämmschichten 8, 9, 10, 11 entlang der jeweils durch Wicklung vorgegebenen Kreisbahn eine Länge aufweisen, die zumindest 80 % des Kreisumfangs des innenliegenden Hohlraums 14 des rohrförmigen Grundkörpers entspricht, wobei die Länge der Dämmschichten 8, 9, 10, 11 in Figur 1 ersichtlich sogar mehr als 100 % des Kreisumfangs des innenliegenden Hohlraums 14 des rohrförmigen Grundkörpers entspricht.

Die Trägerschicht 2, die erste Dämmschicht 8, die zweite Dämmschicht 9, die dritte Dämmschicht 10 und die vierte Dämmschicht 11 bestehen in der Ausführungsform gemäß Figur 1 jeweils aus unterschiedlichen Materialien und weisen unterschiedliche Wärmeleitfähigkeiten auf. In der in Figur 1 skizzierten bevorzugten Ausführungsform besteht die Trägerschicht 2 aus Aluminiumfolie, die erste Dämmschicht 8 aus Erdalkalisilikatwolle, die zweite Dämmschicht 9 aus einer mit einer SiO₂-basierten hydrophoben Imprägnierung imprägnierten und zusätzlich beschichteten Matte, die dritte Dämmschicht 10 aus Steinwolle und die vierte Dämmschicht 11 aus einer mit einer SiO₂-basierten hydrophoben Imprägnierung imprägnierten Matte, die sich von der zweiten Dämmschicht 9 durch ihre Struktur und Wärmeleitfähigkeit unterscheidet.

In der Ausführungsform gemäß Figur 1 wurden die freien Enden der Trägerschicht 2 sowohl am Kontaktpunkt der ersten Wicklung 3 als auch zum Abschluss der Wicklung mit Schweißpunkten 12, 13 an der Trägerschicht 2 befestigt, um die Gesamtstruktur zu fixieren.

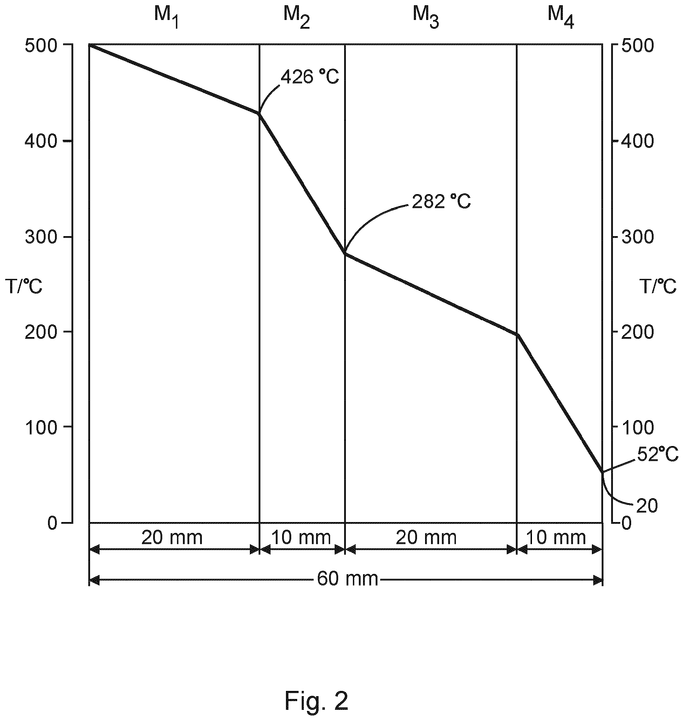

Figur 2 zeigt (lediglich schematisch) den simulierten Temperaturverlauf ausgehend von einem 500 °C heißen Rohr (links auf der x-Achse) radial durch die in Figur 1 offenbarte erfindungsgemäße Hochtemperaturisolierung 1, bis hin zur Oberfläche der Hochtemperaturisolierung 1 (rechts auf der x-Achse) mit einer Temperatur von 52 °C. Die mit M1, M2, M3 und M4 gekennzeichneten Bereiche entsprechend dabei den in Figur 1 offenbarten ersten, zweiten, dritten und vierten Dämmschichten 8, 9, 10, 11. Aufgrund der geringen Dicke der eingesetzten Aluminiumfolie wird diese Trägerschicht 2 in Figur 2 nicht separat eingezeichnet.

Für den Fachmann ist bereits aus dem in Figur 2 dargestellten Verlauf das überaus günstige Temperaturprofil und die ausgezeichnete Isolierleistung einer erfindungsgemäßen Hochtemperaturisolierung klar ersichtlich, die insbesondere angesichts der Gesamtdicke von lediglich etwa 60 mm und der hohen Verfügbarkeit der eingesetzten Materialien, besonders vorteilhaft ist. Dazu kommt jedoch in synergistischer Weise noch der signifikante Beitrag, den die fünf Lagen Aluminiumfolie durch Strahlungsreflektion leisten. Dieser Beitrag lässt sich durch Simulationen nur schwer richtig beziffern, wird aber durch Messungen an erfindungsgemäßen Hochtemperaturisolierungen bestätigt.

## Patentansprüche

1. Hochtemperaturisolierung (1) zur Wärmedämmung von Rohren, umfassend
eine spiralförmig zu einem rohrförmigen Grundkörper gewickelte Trägerschicht (2) mit vier oder mehr Wicklungen,
und
drei oder mehr unterschiedliche Dämmschichten (8, 9, 10),
wobei die innenliegende Wicklung der Trägerschicht (2) den innenliegenden Hohlraum (14) des rohrförmigen Grundkörpers in Umfangsrichtung umgibt,
wobei die in der Trägerschicht (2) angeordneten Dämmschichten (8, 9, 10) entlang der jeweils durch Wicklung vorgegebenen Kreisbahn eine Länge aufweisen, die zumindest 80 % des Kreisumfangs des innenliegenden Hohlraums (14) des rohrförmigen Grundkörpers entspricht, und
wobei die Trägerschicht (2), die erste Dämmschicht (8), die zweite Dämmschicht (9) und die dritte Dämmschicht (10) jeweils aus unterschiedlichen Materialien bestehen und/oder unterschiedliche Wärmeleitfähigkeiten aufweisen und/oder unterschiedliche Temperaturbeständigkeiten aufweisen,
**dadurch gekennzeichnet, dass** der Kreisumfang des innenliegenden Hohlraums (14) zumindest 50 mm beträgt, und dass die Dämmschichten (8, 9, 10) in den Zwischenräumen zwischen den Wicklungen der Trägerschicht (2) angeordnet sind und in radiale Richtung jeweils innen und außen mit der Trägerschicht (2) in Kontakt stehen.

2. Hochtemperaturisolierung (1) nach Anspruch 1, wobei die radial innenliegende Oberfläche und/oder die radial außenliegende Oberfläche der Hochtemperaturisolierung (1) durch die Trägerschicht (2) gebildet wird.

3. Hochtemperaturisolierung (1) nach einem der Ansprüche 1 oder 2, wobei die Dämmschichten (8, 9, 10) und die Trägerschicht (2) gegeneinander verschiebbar angeordnet sind, und/oder wobei die Dämmschichten (8, 9, 10) nur durch die Spannung zwischen zwei Wicklungen der Trägerschicht (2) fixiert werden.

4. Hochtemperaturisolierung (1) nach einem der Ansprüche 1 bis 3, wobei die Dämmschichten (8, 9, 10) jeweils mit zumindest einer weiteren Dämmschicht (8, 9, 10) auf Stoß gegeneinander anliegen, und/oder wobei die Trägerschicht (2) durch eine Vielzahl von einzelnen Trägerschichtelementen gebildet wird, die miteinander auf Stoß anliegen oder überlappen.

5. Hochtemperaturisolierung (1) nach einem der Ansprüche 1 bis 4, wobei die Trägerschicht (2) aus einer Metallfolie oder einer unbeschichteten Glasgewebefolie oder einer beschichteten Glasgewebefolie besteht.

6. Hochtemperaturisolierung (1) nach einem der Ansprüche 1 bis 5, wobei zumindest eine der Dämmschichten (8, 9, 10) aus zwei oder mehr verschiedenen Materialien besteht,
und/oder
wobei zumindest eine der Dämmschichten (8, 9, 10) ein Hybridmaterial, umfasst.

7. Hochtemperaturisolierung (1) nach einem der Ansprüche 1 bis 6,wobei die Wärmeleitfähigkeit der einzelnen Dämmschichten (8, 9, 10) im Vergleich zueinander radial von außen nach innen abnimmt oder zwischen höheren und tieferen Wärmeleitfähigkeiten alterniert, und/oder wobei die Hochtemperaturisolierung (1) bei vierundzwanzigstündiger Beaufschlagung der Innenfläche mit einer Temperatur im Bereich von 90 bis 1000 °C und einer Umgebungstemperatur von 25 °C an der Außenfläche eine Temperatur von 30 bis 85° C aufweist.

8. Hochtemperaturisolierung (1) nach einem der Ansprüche 1 bis 7, zusätzlich umfassend eine auf der Oberfläche des rohrförmigen Grundkörpers angeordnete Glimmerfolie und/oder Kunststofffolie.

9. Hochtemperaturisolierung (1) nach einem der Ansprüche 1 bis 8, wobei der rohrförmige Grundkörper durch Befestigung des Endes der Trägerschicht (2) an der radial außenliegenden Seite einer vorhergehenden Wicklung der Trägerschicht (2) fixiert wird, und/oder wobei die Stirnseiten des rohrförmigen Grundkörpers mit einer Dichtblende verkleidet sind.

10. Hochtemperaturisolierung (1) nach einem der Ansprüche 1 bis 9, wobei die Hochtemperaturisolierung (1) so ausgestaltet ist, dass sie als Manschette um ein Rohr gelegt und an diesem befestigt werden kann.

## Claims

1. A high-temperature insulation (1) for thermally insulating pipes, comprising
a carrier layer (2) having four or more windings wound helically to form a tubular main body,
and
three or more different insulating layers (8, 9, 10),
the inner winding of the carrier layer (2) circumferentially surrounding the inner cavity (14) of the tubular main body,
the insulating layers (8, 9, 10) arranged in the carrier layer (2) having, along the circular path specified in each case by the winding, a length that corresponds to at least 80% of the circumference of the inner cavity (14) of the tubular main body, and
the carrier layer (2), the first insulating layer (8), the second insulating layer (9) and the third insulating layer (10) each consisting of different materials and/or having different thermal conductivities and/or having different temperature resistances,
**characterized in that** the circumference of the inner cavity (14) is at least 50 mm, and that the insulating layers (8, 9, 10) is arranged in the gaps between the windings of the carrier layer (2) and being in contact with the carrier layer (2) both radially inwardly and radially outwardly.

2. The high-temperature insulation (1) according to claim 1, wherein the radially inner surface and/or the radially outer surface of the high-temperature insulation (1) is formed by the carrier layer (2).

3. The high-temperature insulation (1) according to any one of claims 1 or 2, wherein the insulating layers (8, 9, 10) and the carrier layer (2) are arranged to be displaceable relative to one another, and/or wherein the insulating layers (8, 9, 10) are fixed only by the tension between two windings of the carrier layer (2).

4. The high-temperature insulation (1) according to any one of claims 1 to 3, wherein the insulating layers (8, 9, 10) each abut against one another with at least one further insulating layer (8, 9, 10), and/or wherein the carrier layer (2) is formed by a plurality of individual carrier layer elements which abut or overlap one another.

5. The high-temperature insulation (1) according to any one of claims 1 to 4, wherein the carrier layer (2) consists of a metal foil or an uncoated glass fabric film or a coated glass fabric film.

6. The high-temperature insulation (1) according to any one of claims 1 to 5, wherein at least one of the insulating layers (8, 9, 10) consist of two or more different materials,
and/or
wherein at least one of the insulating layers (8, 9, 10) comprise a hybrid material.

7. The high-temperature insulation (1) according to any one of claims 1 to 6, wherein the thermal conductivity of the individual insulating layers (8, 9, 10) decreases radially from the outside inwards in comparison to one another or alternates between higher and lower thermal conductivities, and/or wherein the high-temperature insulation, when the inner surface is exposed for twenty four hours to a temperature in the range from 90 to 1000°C and an ambient temperature of 25°C, has a temperature of 30 to 85°C on the outer surface.

8. The high-temperature insulation (1) according to any one of claims 1 to 7, additionally comprising a mica film and/or plastic film arranged on the surface of the tubular main body.

9. The high-temperature insulation (1) according to any one of claims 1 to 8, wherein the tubular main body is fixed by fastening the end of the carrier layer (2) to the radially outer side of a preceding winding of the carrier layer (2), and/or wherein the end faces of the tubular main body are lined with a sealing panel.

10. The high-temperature insulation (1) according to any one of claims 1 to 9, wherein the high-temperature insulation (1) is designed such that it can be placed as a sleeve around a pipe and fastened thereto.

## Revendications

1. Isolation haute température (1) pour l'isolation thermique de tubes, comprenant
une couche de support (2) enroulée en spirale pour former un corps de base tubulaire avec quatre enroulements ou plus,
et
trois couches isolantes (8, 9, 10) différentes ou plus,
l'enroulement intérieur de la couche de support (2) entourant la cavité intérieure (14) du corps de base tubulaire dans la direction circonférentielle,
les couches isolantes (8, 9, 10) agencées dans la couche de support (2) présentant le long de la trajectoire circulaire respectivement prédéfinie par enroulement, une longueur qui correspond au moins à 80 % de la circonférence de la cavité intérieure (14) du corps de base tubulaire, et
la couche de support (2), la première couche isolante (8), la deuxième couche isolante (9) et la troisième couche isolante (10) étant chacune composée de matériaux différents et/ou présentant des conductivités thermiques différentes et/ou présentant des résistances à la température différentes,
**caractérisée en ce que** la circonférence de la cavité intérieure (14) est d'au moins 50 mm, et que les couches isolantes (8, 9, 10) sont agencées dans les interstices entre les enroulements de la couche de support (2) et sont respectivement à l'intérieur et à l'extérieur en contact avec la couche de support (2) dans le sens radial.

2. Isolation haute température (1) selon la revendication 1, la surface intérieure radiale et/ou la surface extérieure radiale de ladite isolation haute température (1) étant formée par la couche de support (2).

3. Isolation haute température (1) selon l'une quelconque des revendications 1 ou 2, les couches isolantes (8, 9, 10) et la couche de support (2) étant agencées coulissantes les unes par rapport aux autres, et/ou les couches isolantes (8, 9, 10) ne pouvant être fixées que par la tension entre deux enroulements de la couche support (2).

4. Isolation haute température (1) selon l'une quelconque des revendications 1 à 3, les couches isolantes (8, 9, 10) étant respectivement en contact bout à bout avec au moins une autre couche isolante (8, 9, 10), et la couche de support (2) étant formée par une pluralité d'éléments de couche de support individuels qui sont en contact bout à bout les uns avec les autres ou se chevauchent les uns les autres.

5. Isolation haute température (1) selon l'une quelconque des revendications 1 à 4, la couche de support (2) étant composée d'une feuille métallique ou d'une feuille de tissu de verre sans revêtement ou d'une feuille de tissu de verre avec revêtement.

6. Isolation haute température (1) selon l'une quelconque des revendications 1 à 5, au moins une des couches isolantes (8, 9, 10) étant composée de deux ou plusieurs matériaux différents,
et/ou
au moins une des couches isolantes (8, 9, 10) comprenant un matériau hybride.

7. Isolation haute température (1), selon l'une quelconque des revendications 1 à 6, la conductivité thermique des différentes couches isolantes (8, 9, 10) diminuant radialement de l'extérieur vers l'intérieur les unes par rapport aux autres ou alternant entre des conductivités thermiques plus élevées et plus basses, et/ou l'isolation haute température (1) présentant une température de 30 à 85 °C lorsque sa surface intérieure est soumise pendant vingt-quatre heures à une température comprise entre 90 et 1000 °C et sa surface extérieure à une température ambiante de 25 °C.

8. Isolation haute température (1) selon l'une quelconque des revendications 1 à 7, comprenant en supplément une feuille de mica et/ou une feuille de matière plastique agencée sur la surface du corps de base tubulaire.

9. Isolation haute température (1) selon l'une quelconque des revendications 1 à 8, le corps de base tubulaire étant fixé par fixation de l'extrémité de la couche de support (2) à la face extérieure radiale d'un enroulement précédent de la couche de support (2), et/ou les faces frontales du corps de base tubulaire étant recouvertes d'un écran d'étanchéité.

10. Isolation haute température (1) selon l'une quelconque des revendications 1 à 9, ladite isolation haute température (1) étant conçue de manière à pouvoir être placée en tant que manchon autour d'un tube et fixée à celui-ci.
